# EUROPÄISCHE PATENTSCHRIFT

(11) **EP 2 122 970 B1**
(45) Veröffentlichungstag und Bekanntmachung des Hinweises auf die Patenterteilung: **26.02.2014**
(21) Anmeldenummer: 07821307.1
(22) Anmeldetag: 15.10.2007
(51) Int. Cl.: H04L 12/18, H04N 21/21, H04N 21/23, H04N 21/845

(54) **VERFAHREN UND SENDER ZUM BEREITSTELLEN EINES DATENSTROMS, VERFAHREN UND EMPFÄNGER ZUM ABRUF ZUMINDEST EINES DATENSEGMENTS EINES DATENSTROMS**
METHOD AND TRANSMITTER FOR PRODUCING A DATA STREAM, METHOD AND RECEIVER FOR CALLING AT LEAST ONE DATA SEGMENT IN A DATA STREAM
PROCÉDÉ ET ÉMETTEUR POUR PRÉPARER UN FLUX DE DONNÉES, PROCÉDÉ ET RÉCEPTEUR POUR INTERROGER AU MOINS UN SEGMENT DE DONNÉES D'UN FLUX DE DONNÉES

(30) Priorität: 19.12.2006 DE 102006060043
(43) Veröffentlichungstag der Anmeldung: 25.11.2009
(73) Patentinhaber: Siemens Aktiengesellschaft, 80333 München (DE)
(72) Erfinder: OERTEL, Norbert, 84032 Landshut (DE)
(86) Internationale Anmeldenummer: PCT/EP2007/060940
(87) Internationale Veröffentlichungsnummer: WO 2008/074535

(56) Entgegenhaltungen:
- WO-A-02/073441
- US-A1- 2005 015 431
- ROWSTRON A ET AL: "Storage management and caching in PAST, a large-scale, persistent peer-to-peer storage utility" OPERATING SYSTEMS REVIEW, ACM PRESS, XX, Bd. 35, Nr. 5, 21. Oktober 2001 (2001-10-21), Seiten 188-201, XP002302659 ISSN: 0163-5980
- CASTRO M ET AL: "Splitstream: High-bandwidth content distribution in cooperative environments" ACM SOSP. PROCEEDINGS OF THE ACM SYMPOSIUM ON OPERATING SYSTEMS PRINCIPLES, ACM,, US, 19. Oktober 2003 (2003-10-19), Seiten 298-313, XP002348345
- KEN YIU: 'Supporting Interactive Media-on-Demand Service in Peer-to-Peer network', [Online] 24 November 2005, Gefunden im Internet: <URL:lidecc.cs.uns.edu.ar/~agm/p2p/indexP2P _ICDCS04.pdf> [gefunden am 2012-08-07]

## Beschreibung

Die Erfindung betrifft ein Verfahren und einen Sender zum Bereitstellen eines Datenstroms und ein Verfahren und einen Empfänger zum Abruf zumindest eines Datensegments eines Datenstroms.

Zu einem Verteilen von großen Datenmengen im Sinne eines Broadcasts, wie beispielsweise bei IP-TV (IP - Internet Protocol), sind derzeit folgende zwei Systeme bekannt:

Bei einem ersten System wird der Broadcast mit Hilfe einer zentralen Infrastruktur durchgeführt. Dabei sendet ein Broadcaster einen zu verteilenden Datenstrom an einen Multimediaserver, der über eine Netzanbindung mit einem oder mehreren Nutzern verfügt, und dafür zuständig ist, den Datenstrom an diese Nutzer zu verteilen. Die Verteilung wird beispielsweise durch Punkt-zu-Punkt-Verbindungen gewährleistet. Bei einer großen Anzahl von Nutzern kann eine Hierarchie von Multimediaservern zum Einsatz kommen, die eine Last zum Verteilen des Datenstroms eines Multimediaservers reduzieren. Ferner kann durch mehrere Multimediaserver erreicht werden, dass eine Belastung des Core-Netzwerks reduziert wird, da ein jeweiliger Multimediaserver ausschließlich ein Netzsegment bedient. Bei diesem System ist jedoch eine zentrale Infrastruktur notwendig, welche die Verteilung des Datenstroms an den bzw. die Multimediaserver steuert.

Ein zweites System verwendet Overlay-Strukturen mit Verteilbäumen, die ohne eine zentrale Infrastruktur auskommen. Bekannt sind bspw. Relay-Verfahren über P2P-Netze (P2P - Pier to Pier), wie zum Beispiel eine Technologie Peer Cast. Neue Ansätze dieses zweiten Systems spalten den Datenstrom in Teilströme au, und verteilen diese Teilströme über Overlay-Strukturen, wie zum Beispiel bei dem bekannten Splitstream-Verfahren [1]. Dies führt dazu, dass alle Knoten innere Knoten in einem der Verteilbäume sein können und damit zur Verteilung des Datenstroms Bandbreite beisteuern. Nachteilig bei diesen Verfahren ist jedoch, dass ein erheblicher Aufwand für eine Aufrechterhaltung der Verteilbäume benötigt wird. So ist eine Komplexität und eine Fehleranfälligkeit des Verfahrens wegen der dezentralen Verwaltung der Baumstrukturen groß.

WO 02/073441 A1 offenbart ein Verfahren zum Aufteilen und redundanten Speichern einer Datei auf mehreren Servern. Dabei wird eine Datei in mehrere Sub-Dateien aufgeteilt, die anschließend verteilt auf einem oder mehreren Servern gespeichert werden. Die Sub-Dateien können parallel und gleichzeitig von einem oder mehreren Servern übertragen werden, um die Übertragungsrate zu erhöhen.

Das Dokument "Storage Management ahd Caching in PAST, A Large-scale, Persistent Peer-to-peer Storage Utility", Rowstron a. et al., Operating Systems Review, ACM Press, XX, Bd. 35, Nr. 5, 21. Oktober 2001, 5.188-201, offenbart ein Internet-basiertes Overlay-Netzwerk aus Speicherknoten sowie Verfahren zum statistisch gleichmäßig verteilten, redundanten Speichern von Dateien. Knoten und Dateien werden gleichförmig verteilte Identifier zugewiesen. Kopien von Dateien werden auf solchen Knoten gespeichert, deren Identifier dem jeweiligen Datei-Identifier am ähnlichsten ist. Diese statistische Zuweisung von Dateien zu Speicherknoten balanciert annäherungsweise die Anzahl von auf jedem Knoten gespeicherten Dateien.

US 2005/015431 A1 offenbart ein System und ein Verfahren zum Verteilen einer Datei von einem ersten Knoten an eine Vielzahl von Empfänger-Knoten. Bei dem Verfahren wird versucht, eine Vielzahl von Unterdateien, die eine Datei enthalten, von einem ersten Knoten an eine erste Gruppe einer Vielzahl von Empfänger-Knoten zu verteilen, wobei der erste Knoten versucht, wenigstens eine Unterdatei an jeden Empfänger-Knoten der ersten Gruppe zu verteilen. Es werden dabei jedoch nicht alle der Vielzahl von Unterdateien vom ersten Knoten zu einem der Empfänger-Knoten der ersten Gruppe verteilt.

Das Dokument "Supporting Interactive Media-on-Demand Service in Peer-to-Peer Network", Ken Yiu, 24. November 2005, offenbart ein Verfahren für einen interaktiven Media on Demand-Service in einer P2P-Umgebung. Kleine Teile einer großen Datei eines Video-Servers werden dabei in temporären Speicherbereichen von Netzwerk-Knoten gespeichert, die diese große Datei ebenfalls angefordert haben. Das Auffinden von Netzwerk-Knoten, auf denen solche kleinen Teile einer großen Datei temporär gespeichert sind, erfolgt mittels einer verteilten Hash-Tabelle.

Somit ist es die Aufgabe der vorliegenden Erfindung, Verfahren und Vorrichtungen anzugeben, mit denen eine Verteilung und ein Abruf eines Datenstromes im Sinne eines Broadcasts in einfacher und sicherer Weise gewährleistet werden.

Diese Aufgabe wird durch die unabhängigen Ansprüche gelöst. Die abhängigen Ansprüche stellen Weiterbildungen der Erfindung dar.

Die Erfindung betrifft ein Verfahren zum Bereitstellen eines Datenstroms, bei dem der Datenstrom in zumindest ein Datensegment aufgeteilt, ein zu dem Datensegment eindeutig zuordenbarer Schlüssel erstellt, ein Knoten aus einer Menge von Knoten in einem Netzwerk für das Datensegment auf Basis des zu dem Datensegment zugeordneten Schlüssels ausgewählt und das Datensegment an den für das Datensegment ausgewählten Knoten übermittelt wird.

Das vorliegende Verfahren ermöglicht eine einfache Verteilung des Datenstroms mit zumindest einem Datensegment in dem Netzwerk durch eine einfache Verknüpfung des Datensegments mit demjenigen Knoten, der das jeweilige Datensegment zum Abruf durch einen Benutzer, d.h. Empfänger, bereitstellt. Dabei wird eine Last zum Abrufen der Datensegmente von einem einzigen Broadcast-Server reduziert, da die Empfänger die Datensegmente nicht von einem Broadcast-Server, sondern von dem bzw. den Knoten abrufen. Zudem wird die Verteilung der Datensegmente sicherer vor Angreifern, da der Empfänger denjenigen Knoten aus der Menge von Knoten im Netzwerk kennen muss, der über das gewünschte Datensegment verfügt. Zu der Bestimmung dieses Knotens muss die Erstellung des Schlüssels durchgeführt werden, wobei der Schlüssel von dem Datensegment abgeleitet wird.

Zudem betrifft die Erfindung auch ein Verfahren zum Abruf zumindest eines Datensegments eines Datenstroms durch einen Empfänger, wobei das Datensegment des Datenstroms durch einen Knoten in einem Netzwerk bereitgestellt wird, bei dem ein von dem Sender zugewiesener, zu dem Datensegment eindeutig zuordenbarer Schlüssel bereitestellt, ein Knoten aus einer Menge von Knoten in dem Netzwerk für das Datensegment auf Basis des zu dem Datensegment zugeordneten Schlüssels ausgewählt, eine Anfragenachricht an den ausgewählten Knoten zum Übermitteln des zu dem Schlüssel dazugehörigen Datensegments versandt und das Datensegment durch den Empfänger empfangen wird.

Das Verfahren zum Abruf gewährleistet, dass das auf dem Knoten bereitgestellte Datensegment durch den Empfängerknoten in einfacher und sicherer Weise abrufbar ist.

Die beiden genannten Verfahren ermöglichen bei Verwendung von zwei oder mehreren Datensegmenten eine Erhöhung der Sicherheit, da die Datensegmente auf einer Vielzahl unterschiedlicher Knoten gespeichert sein können, und ein Angreifer nicht nur die Knoten kennen muss, die zum Empfangen der Datensegmente abgefragt werden müssen, sondern auch eine Reihenfolge der Anfragen zu beachten hat, um somit aus dem empfangene Datensegmenten einen gültigen Datenstrom rekonstruieren zu können. Sicherer bedeutet im Rahmen dieser Erfindung, dass der Angreifer mit nicht unerheblichem Aufwand, z.B. Rechenaufwand, auf das bzw. die Datensegmente zugreifen kann, wobei sich ein Angriff des Angreifers auf das Abrufen der Datensegmente und/oder die Manipulation der Datensegmente bezieht.

In einer vorzugsweisen Weiterbildung des Verfahrens zum Abruf umfasst die Anfragenachricht zumindest eine Kennung, die eine eindeutige Zuordnung der Anfragenachricht zu dem angefragten Datensegment kennzeichnet. Insbesondere umfasst die Anfragenachricht den Schlüssel, der das Datensegment eindeutig identifiziert. Die Erweiterung zeigt den Vorteil, dass eine eindeutige Anfrage des Datensegments von dem ausgewählten Knoten auch dann gewährleistet wird, falls der Knoten mehr als ein Datensegment des Datenstroms bereithält. Dies ist von besonderem Interesse, falls nur eine geringe Anzahl an Knoten im Netzwerk vorhanden ist.

Vorzugweise wird dem Empfängerknoten eine Synchronisationsinformation mitgeteilt, wobei mit Hilfe der Synchronisationsinformation derjenige Schlüssel bestimmt wird, der den Abruf eines weiteren Datensegments des Datenstroms gewährleistet. Das weitere Datensegment entspricht dabei demjenigen Datensegment, das benötigt wird, um den Datenstrom, beginnend mit dem weiteren Datensegment, abzurufen. Dies ist bspw. vorteilhaft für denjenigen Anwendungsfall, bei dem der Empfänger den Datenstrom von einer beliebigen Position starten möchte. Insbesondere bei einer Echtzeitübertragung, z.B. einem Fußballspiel, zeigt das weitere Datensegment den aktuellen Einstiegspunkt der Übertragung des Datenstroms an.

Hierbei kann die Synchronisationsinformation durch eine explizite Angabe des Schlüssels oder zumindest durch einen erster vorhersagbarer Parameter des weiteren Datensegments mitgeteilt werden. Die Angabe des Schlüssels erlaubt eine einfache Ermittlung des Knotens, der das weitere Datensegment umfasst. Der zumindest eine erste vorhersagbare Parameter ermöglicht dem Empfänger denjenigen Schlüssel zu ermitteln, mit Hilfe dessen der das weitere Datensegment umfassende Knoten identifizierbar ist.

Vorzugweise wird das Datensegment bei seiner Übermittelung auf einem Übermittlungspfad von dem Knoten zu dem Empfänger durch zumindest einen auf diesem Übermittlungspfad liegenden Zwischenknoten für eine vorgebbare Zeitdauer gespeichert. Zudem kann in einer Erweiterung durch den Zwischenknoten die Anfragenachricht ausgewertet, und, falls das zu dem Schlüssel dazugehörige Datensegment vorhanden ist, das Datensegment an den Empfänger geschickt werden. Die Auswertung erfolgt beispielsweise anhand einer Adresse des Knotens. Beide Erweiterungen zeigen jeweils den Vorteil, dass bei einer wiederholten Abfrage durch einen Empfänger das angeforderte Datensegment bereits durch den Zwischenknoten an den anfragenden Empfänger geliefert werden kann. Dies reduziert zum einen eine Antwortzeit zum Empfangen des Datensegments durch den Empfänger, da nicht der ganze Übermittlungspfad bis zum ausgewählten Knoten durchlaufen werden muss. Zum anderen wird eine Netzlast zur Übertragung des Datenpakets eingespart, da das Datenpaket nicht den gesamten Übermittlungspfad durchlaufen muss, sondern lediglich auf dem Teil des Übermittlungspfads von dem Zwischenknoten zu dem Empfängerknoten transportiert wird. Durch Vorgabe der vorgebbaren Zeitdauer wird ein interner Speicherüberlauf im Zwischenknoten vermieden, da nach der Zeitdauer, z.B. 10 Min9uten, das Datensegment gelöscht wird.

In einer optionalen Weiterbildung der Erfindung werden Anfragennachrichten verschiedener Empfänger zum Abruf desselben Datensegments aufgrund einer vorgebaren oder zufällig ermittelten Zeitverzögerung verschickt. Hierdurch werden die jeweiligen Anfragenachrichten zu unterschiedlichen Zeitpunkten verschickt, so dass bei wiederholtem Versenden der Anfragenachricht der Zwischenknoten das angefragte Datensegment bereits vorrätig hat, da aufgrund des erstmaligen Versendens der Anfragenachricht das angefragte Datensegment im Zwischenknoten gespeichert worden ist. Mit dieser Erweiterung wird erzielt, dass die Anfragenachrichten zu unterschiedlichen Zeitpunkten abgeschickt werden, wodurch erreicht wird, dass der Zwischenknoten das angefragte Datensegment bei Empfang der zweiten und weiteren Anfragenachricht vorrätig hat und ohne Weiterleiten der Anfragenachricht an den Knoten das gewünschte Datensegment dem Empfänger zustellen kann. Hiermit kann eine Reduktion einer Übertragungsbandbreite in Teilen des Datennetzes erzielt werden.

Vorzugsweise wird der Schlüssel durch einen systematischen Schlüssel erzeugt, wobei der systematische Schlüssel auf Grundlage zumindest eines zweiten vorhersagbaren Parameters des Datensegments generiert wird. Der systematische Schlüssel ist in einfacher Art und Weise erzeugbar, wobei bereits bei Kenntnis des zweiten vorhersagbaren Parameters die Schlüsselerzeugung ermöglicht wird. So kann der vorhersagbare Parameter eine Information eines Codierschemas sein, wie z.B. eine syntaktische Information, wobei diese Information das Datensegment durchlaufen hat, wie z.B. eine Bildnummer für das Datensegment, das ein komprimiertes Bild gemäß einem Bildkodierverfahren umfasst.

In einer alternativen Weiterbildung wird der Schlüssel durch einen nicht-systematischen Schlüssel erzeugt, wobei der nicht-systematische Schlüssel auf Basis eines Inhalts des Datensegments, insbesondere eines Bildinhalts, generiert wird. Hierbei wird der Inhalt des Datensegments zur Erstellung des Schlüssels verwendet. Der Schlüssel wird bspw. mit Hilfe eines hash-key Verfahrens, wie dem MD5-Verfahren (MD5 - Message Digest Algorithm 5) erzeugt. Einem Fachmann sind weitere Verfahren bekannt, bei denen aus dem Inhalt des Datensegments ein Schlüssel erzeugbar ist, sodass hierauf nicht näher eingegangen wird.

In einer vorzugsweisen Weiterbildung werden der erste und/oder zweite vorhersagbare Parameter durch eine das Datensegment charakterisierende Nummer bestimmt. Hierbei kann die charakterisierende Nummer eine Bildnummer, eine Paketnummer, eine Anzahl an bereits übertragenen Datensegmenten des Datenstroms, oder eine Uhrzeit sein, an der das Datensegment ausgegeben werden soll, in Form einer Nummer sein, wie z.B. die Uhrzeit ausgedrückt in Sekunden. Diese Aufzählung an Varianten zur Bildung einer zu einem der Datensegmente eindeutigen charakteristischen Nummer soll nicht als Beschränkung verstanden werden. Einem Fachmann sind noch weitere Varianten bekannt, so dass hierauf nicht näher eingegangen wird.

Zudem kann der erste und/oder zweite vorhersagbare Parameter zusätzlich eine Angabe über eine Verarbeitungsgeschwindigkeit an Datensegmenten pro Zeiteinheit umfassen, wobei mit Hilfe der Verarbeitungsgeschwindigkeit der zu einem Zeitpunkt gültige Schlüssel zum Abruf des zu diesem Zeitpunkt gültigen Datensegments erstellt wird. Hierdurch kann der Empfänger nach einem Empfang des ersten oder zweiten vorhersagbaren Parameters und der Verarbeitungsgeschwindigkeit den zu einem späteren Zeitpunkt gültigen Schlüssel ermitteln, ohne dass eine erneute Übertragung des zu dem späteren Zeitpunkt gültigen ersten oder zweiten vorhersagbaren Parameters nötig ist. Hierdurch wird Übertragungsbandbreite eingespart und eine Flexibilität des Verfahrens erhöht.

Vorzugsweise wird ein Auswählen des Knotens auf Grundlage des Schlüssels derart durchgeführt, dass eine Identität zwischen einem den Knoten charakterisierenden Parameter und dem Schlüssel maximiert oder zumindest ein vorgebbarer Schwellwert erreicht. Hiermit ermöglicht das Verfahren den Knoten auch zu erkennen, falls Fehler bei der Erstellung und/oder der Übertragung des Schlüssels auftreten. Ferner kann ein Verfahren zur Ermittlung des Knotens vorzeitig abgebrochen werden, nachdem eine Bestimmung des Knotens eine durch den vorgebbaren Schwellwert angegebene Genauigkeit erreicht hat. Die Verfahren können auch für zwei oder mehrere Datensegmente eingesetzt werden.

Die Erfindung umfasst zudem einen Sender gemäß Anspruch 15, der derart ausgestaltet ist, dass das Verfahren zum Bereitstellen des Datenstroms und optional die dazugehörigen Weiterbildungen durchführbar sind.

Schließlich ist Teil der Erfindung ein Empfänger gemäß Anspruch 17, der derart ausgestaltet ist, dass das Verfahren zum Anruf zumindest eines Datensegments und optional die dazugehörigen Weiterbildungen durchführbar sind.

Die Erfindung und ihre Weiterbildungen werden anhand von Zeichnungen näher erläutert. Es zeigen:
- Figur 1: ein Datennetz mit mehreren Knoten, einem Sender und zwei Empfängern, sowie einer Speichereinheit und einem Zwischenknoten zum Durchführen der Verfahren zum Bereitstellen eines Datenstroms und zum Abruf zumindest eines Datensegments;
- Figuren 2A, 2B: Vorgehensweisen zum Bilden eines Schlüssels für das Datensegment;

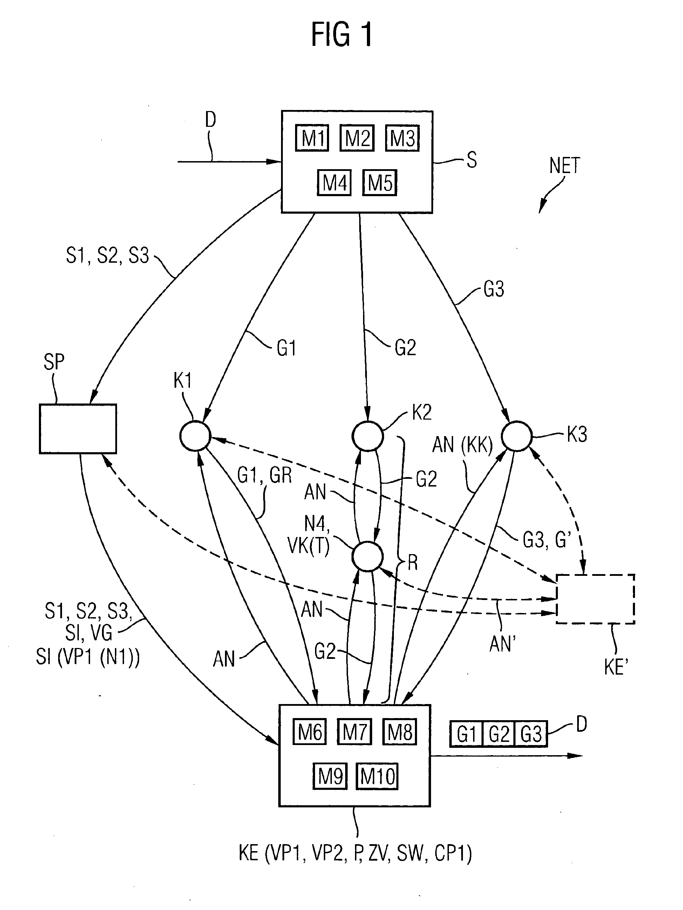

In Figur 1 ist ein Sender S, ein Empfänger E, mehrere Knoten N1,...,N4 und eine Speichereinheit SP zu sehen, die in einem Netzwerk NET, zum Beispiel einem IP-basierten Netzwerk (IP - Internet Protocol) zum Austausch von Daten und/oder Informationen miteinander verbunden sind. Der Sender, zum Beispiel ein TV-Broadcaster, möchte einen Datenstrom D, zum Beispiel aktuelle Nachrichten, für zumindest einen Empfänger zur Verfügung stellen. Dazu teilt der Sender S den Datenstrom in Datensegmente G1, G2, G3 auf. Diese Aufteilung kann inhaltsbezogen durchgeführt werden, d. h. jedes Datensegment entspricht einer Teilnachricht der aktuellen Nachrichten. Alternativ kann die Aufteilung auf Grund einer physikalischen Eigenschaft des Datenstroms, wie zum Beispiel bildweise, ausgeführt werden.

In einem darauf folgenden Schritt weist der Sender einem jeweiligen Datensegment einen Schlüssel S1, S2, S3 eindeutig zu. Die Schlüssel zeigen die Eigenschaft, dass sie jeweils nur zu einem der Datensegmente eindeutig zuordenbar sind. Auf eine konkrete Vorgehensweise zum Erstellen dieser Schlüssel wird an späterer Stelle eingegangen.

In einem weiteren Schritt werden die Datensegmente jeweils an einen der Knoten K1,...,K3 verteilt. Dabei wird derjenige Knoten K1 für das Datensegment G1 angewählt, der aus der Menge M an Knoten K1, K2, K3, K4 mit Hilfe des zu dem Datensegment G1 dazugehörigen Schlüssels S1 eindeutig zugewiesen werden kann. So wird der Schlüssel S1 durch ein binäres Muster mit 16 Stellen charakterisiert. Ferner ist jedem Knoten K1,...,K3 jeweils ein charakteristisches Identifikationsparameter CP1, CP2, CP3 zugeordnet. Der jeweilige charakteristische Identifikationsparameter CP1, CP2, CP3 charakterisiert seinen Knoten in eindeutiger Weise, z.B. durch ein jeweiliges 16-Bit Binärmuster.

Die Bestimmung des zu dem Schlüssel S1 passenden Knotens K1 wird dadurch erreicht, dass für den vorgegebenen Schlüssel S1 derjenige Knoten K1, K2, K3 ausgewählt wird, dessen charakteristischer Identifikationsparameter CP1, CP2, CP3 einen Abstand zwischen dem jeweiligen Identifikationsparameter und dem Schlüssel minimiert, d.h. eine Identität zwischen dem Identifikationsparameter und dem Schlüssel maximiert. Dies wird anhand des folgenden Beispiels näher ausgeführt.
S1 = 0000 1110 0000 1110
CP1 = 0000 1011 0001 1100
CP2 = 1110 1111 1101 0000
CP3 = 0110 0000 0000 1111

Wird eine Anzahl A an identischen Binärstellen ermittelt, so ist die Anzahl der jeweiligen charakteristischen Parameter CP1,...,CP3 gegenüber dem Schlüssel S1 wie folgt:
A(CP1) = 12, A(CP2) = 6, A(CP3) = 10.

Somit zeigt der charakteristische Parameter CP1 den geringsten Abstand, d.h. die größte Identität zum Schlüssel S1, wodurch der Knoten K1 eindeutig identifiziert worden ist. Anstelle einer Maximierung kann die Identität mittels eines Schwellwerts SW ausgeführt werden. Dabei wird die Identität zwischen Schlüssel und charakteristischem Parameter des jeweiligen Knotens erkannt, falls die Identität zumindest den Schwellwert erreicht. Im obigen Zahlenbeispiel für die Identität beträgt der Schwellwert SW = 11.

Somit wird der Knoten K1 ausgewählt, da die Identität zwischen diesem, bzw. seinem charakteristischen Parameter, und dem Schlüssel den Schwellwerts zumindest erreicht, da A(CP1) ≥ SW ist.

Nachdem der Schlüssel S1 einem jeweiligen Knoten K1,...,K3 eindeutig zugeordnet worden ist, überträgt der Sender das jeweilige Datensegment an den anhand des Schlüssels zugeordneten Knoten. In Figur 1 wird das Datensegment G1 an den Knoten K1, das Datensegment G2 an den Knoten K2 und das Datensegment G3 an den Knoten K3 übermittelt. Ferner werden die Schlüssel S1, S2, S3 von dem Sender an die Speichereinheit SP verschickt und dort abgelegt.

Zum Abrufen zumindest eines der Datensegmente des Datenstroms durch den Empfänger KE fordert der Empfänger KE zunächst die Schlüssel S1,...,S3 von der Speichereinheit an. Nachfolgend werden, analog zu den Ausführungen des Senders, jedem Schlüssel jeweils einer der Knoten K1,...,K3 eindeutig zugeordnet. Zum Abrufen des Datensegments sendet der Empfänger eine Anfragenachricht AN an den Knoten K1, der das Datensegment G1 an den Empfänger überträgt. Dann schickt der Empfänger eine weitere Anfragenachricht AN an den Knoten K2, wobei diese Anfragenachricht auf einem Übermittlungspfad R, zwischen dem Empfänger KE und dem Knoten K2, zunächst an den Knoten K4, d.h. einem Zwischenknoten VK, gelangt, der die Anfragenachricht an den Knoten K2 weiterleitet. Der Knoten K2 antwortet nach Empfang der Anfragenachricht durch Übersenden des Datensegments G2, wobei dieses Datensegment zunächst vom Knoten K4 empfangen und von diesem an den Empfänger E weitergeleitet wird. Schließlich stellt der Empfänger eine weitere Anfragenachricht AN an den Knoten K3, wobei der Knoten K3 nach Empfang dieser weiteren Anfragenachricht das Datensegment G3 zu dem Empfänger vermittelt. Der Empfänger setzt die empfangenen Datensegmente G1,...,G3 zusammen, wodurch der Datenstrom D erstellt wird.

In dem Ausführungsbeispiel gemäß Figur 1 ist sowohl ein Schlüssel eindeutig einem Knoten als auch ein Knoten eindeutig einem Schlüssel zugeordnet werden. Im Allgemeinen können auch mehrere Schlüssel einem Knoten eindeutig zugeordnet werden. In diesem Fall umfasst die Anfragenachricht eine Kennung KK, wie zum Beispiel den Schlüssel, damit der die Anfragenachricht empfangende Knoten das gewünschte Datensegment eindeutig identifizieren und dieses an den Empfänger schicken kann.

In einer Erweiterung möchte ein weiterer Empfänger KE' die Datensegmente G1,...,G3 abrufen. Die dabei auftretenden Kommunikationsbeziehungen sind mit gestrichelten Pfeilen versinnbildlicht. Zunächst ruft der weitere Empfänger die Schlüssel S1 bis S3 von der Speichereinheit SP ab. Anschließend werden, analog zur Vorgehensweise des Empfängers KE, mit Hilfe von jeweiligen Anfragenachrichten AN die Knoten K1,...,K3 angefragt, die jeweiligen Datensegmente G1,...,G3 an den weiteren Empfänger zu übermitteln. Eine Erweiterung gegenüber des für den Empfänger KE beschriebenen Verfahrens ergibt sich bei der Anfrage des weiteren Empfängers an den Knoten K2 zur Erlangung des Datensegments G2.

Bei der Zustellung des Datensegments G2 zu dem Empfänger KE schickt der Knoten K2 das Datensegment G2 zunächst an den Knoten K4, d.h. dem Zwischenknoten VKJ, und dieser leitet das Datensegment G2 an den Empfänger KE weiter. Auf diesem Übertragungspfad R wird in der Erweiterung vor der Zustellung des Datensegments G2 von dem Knoten K4 an den Empfänger E das Datensegment G2 für eine vorgebbare Zeitdauer T, zum Beispiel T = 1 Stunde, in dem Knoten K4 zwischengespeichert. Der Knoten K4 repräsentiert auf dem Übertragungspfad R den Zwischenknoten VK. Nach der Abfrage des Datensegments G2 durch den Empfänger KE fragt der weitere Empfänger KE' das selbe Datensegment G2 von dem Knoten K2 ab. Hierzu wird seine weitere Anfragenachricht AN' zunächst dem Zwischenknoten VK zugestellt. Der Zwischenknoten VK wertet die weitere Anfragenachricht aus und erkennt, dass er das angefragte Datensegment G2 zwischengespeichert hat. Daraufhin übermittelt der Zwischenknoten VK dem weiteren Empfänger das angefragte Datensegment G2. In dieser Erweiterung wird auf ein Weiterleiten der weiteren Anfragenachricht an den Knoten K2 und ein Übermitteln des Datensegments G2 durch den Knoten K2 von den bzw. an den Knoten K4 verzichtet, da das angefragte Datensegment bereits innerhalb des Übermittlungspfads R vorhanden ist.

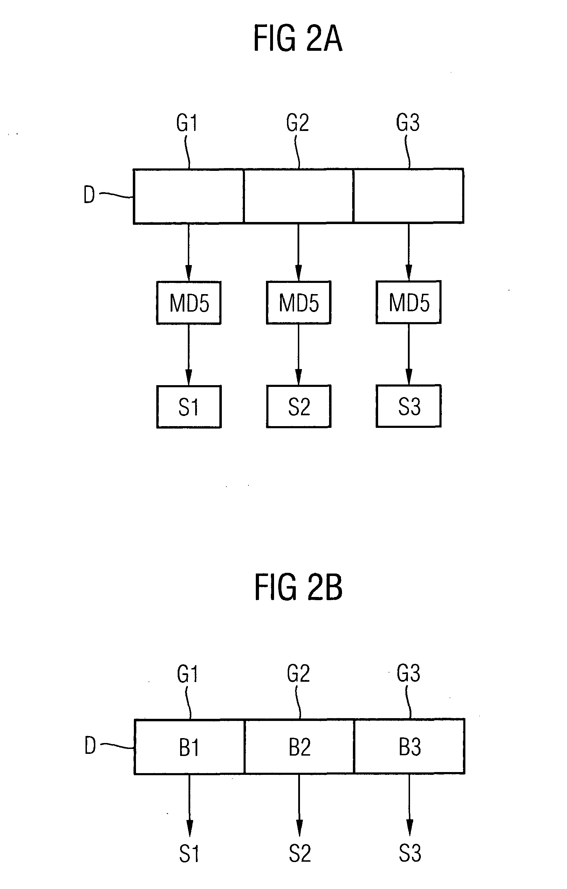

Zur Bestimmung des Schlüssels kann ein systematischer Schlüssel oder ein nicht systematischer Schlüssel erzeugt werden. Bei einem nicht systematischen Schlüssel wird, wie in Figur 2a abgebildet, der Schlüssel aus dem Inhalt des jeweiligen Datensegments mit Hilfe eines Verfahrens, zum Beispiel mit dem MD5-Verfahren (MD5 - Message Digest Algorithm 5) ein Hash-Wert mit einem beispielsweise 128Bit-Hash-Wert, erzeugt. Ist das Datensegment G1 ein Bild, so wird aus dem Inhalt des Bildes der Schlüssel gebildet, d.h. S1 = MD5 (G1).

Bei dem systematischen Schlüssel wird der Schlüssel dadurch erzeugt, dass ein weiterer vorhersagbarer Parameter VP2 des Datensegments G1 in Betracht gezogen wird. Dies wird anhand von Figur 2b näher erläutert. Hierbei besteht der Datenstrom D aus drei Bildern B1, B2, B3, wobei das erste Bild B1 eine Bildnummer 1, das zweite Bild eine Bildnummer 2 und das dritte Bild eine Bildnummer 3 aufweisen. Jedes Bild ist in diesem Beispiel einem jeweiligen Datensegment zugeordnet, d.h. G1 = B1, G2 = B2, G3 = B3. Zur Bildung des Schlüssels S1 für das Datensegment G1 wird der Schlüssel auf Grundlage der dem Datensegment zugeordneten Bildnummer gebildet, zum Beispiel S1 = 1. Für die weiteren Schlüssel S2, S3 wird analog vorgegangen, so dass S2 = 2 und S3 = 3 ist.

Neben den hier vorgestellten Verfahren zum Bilden des nicht systematischen Schlüssels und des systematischen Schlüssels sind einem Fachmann eine Vielzahl weiterer Verfahren bekannt, so dass hierauf nicht näher eingegangen wird.

Beschreibt der Datenstrom D einen Echtzeitdatenstrom, beispielsweise eine Fernsehübertragung eines Fußballspiels, so ist es in der Praxis nicht zweckmäßig, dass der Empfänger alle Datensegmente seit Beginn der Übertragung des Datenstroms anfordert, um einen Einstieg in das aktuelle Geschehen des Fußballspiels zu ermöglichen. Hierzu wird dem Empfänger eine Synchronisationsinformation SI mitgeteilt, wobei mit Hilfe der Synchronisationsinformation derjenige Schlüssel ermittelbar ist, der den Abruf eines weiteren Datensegments G' gewährleistet. Die Synchronisationsinformation SI kann durch Angabe des für das weitere Datensegment zu verwendenden Schlüssels oder durch Angabe zumindest eines ersten vorhersagbaren Parameters VP1 realisiert werden. Im ersten Fall wird derjenige Schlüssel dem Empfänger explizit mitgeteilt, auf Grundlage dessen der Empfänger das aktuell gültige Datensegment abrufen soll. Im zweiten Fall kann mit Hilfe des ersten vorhersagbaren Parameters VP1 ein Synchronisationspunkt innerhalb des Datenstroms mitgeteilt werden, mit dessen Hilfe ein zu dem Synchronisationspunkt dazugehöriger Schlüssel ermittelbar und damit das dazugehörige Datensegment abrufbar ist. Beispielsweise wird als erster vorhersagbarer Parameter VP1 eine aktuelle Bildnummer übertragen. Ist die aktuelle Bildnummer beispielsweise 8596, so ist VP1 = 8596. Mit Hilfe dieser Information ist der Empfänger in der Lage, den dazu passenden Schlüssel zu generieren, wie S1(VP1) = 8596. Anhand des Schlüssels ist der Knoten, der das weitere Datensegment hat, identifizierbar und das weitere Datensegment ist abrufbar.

In einer Erweiterung der vorhergehenden Weiterbildung kann dem Empfänger mit dem ersten und/oder zweiten vorhersagbaren Parameter VP1, VP2 zusätzlich eine Angabe über eine Verarbeitungsgeschwindigkeit VG an Datensegmenten pro Zeiteinheit mitgeteilt werden, wobei mit Hilfe der Verarbeitungsgeschwindigkeit VG der zu einem Zeitpunkt P gültige Schlüssel zum Abruf des zu diesem Zeitpunkt P gültigen Datensegments GR erstellbar ist. Wird beispielsweise dem Empfänger mitgeteilt, dass die aktuelle Bildnummer, d. h. der erste vorhersagbare Parameter VP1 = 1512 ist, und dass die Verarbeitungsgeschwindigkeit VG = 15 Bilder pro Sekunde, d.h. 15 Datensegmente pro Sekunde verarbeitet werden, so kann der Empfänger zu einem späteren Zeitpunkt, zum Beispiel nach 30 Sekunden die aktuelle Bildnummer aus VP1 + VG · 30 Sekunden = 1512 + 15 · 30 = 1962 errechnen.

Das bedeutet, dass nach 30 Sekunden die aktuelle Bildnummer = 1962 ist, und somit der neue Schlüssel auf Basis der neuen aktuellen Bildnummer ermittelt werden kann.

In einer Erweiterung werden Anfragenachrichten AN, AN' verschiedener Empfänger KE, KE' zum Abruf desselben Datensegments G1 aufgrund einer vorgebbaren oder zufälligen Zeitverzögerung ZV verschickt. Dies hat zur Folge, dass die Anfragenachrichten AN, AN' zu unterschiedlichen Zeiten abgeschickt werden und der Zwischenknoten nach einem erstmaligen Empfang der Anfragenachricht AN das angefragte Datensegment G1 für nachfolgende Anfragenachrichten zwischenspeichert.

So ist beispielsweise jedem der Empfänger KE, KE' eine individuelle Zeitverzögerung ZV vorgegeben, die vor dem Versenden der Anfragenachricht einzuschalten ist wie z.B.

| | ZV |
|---|---|
| KE | 0,5 Sekunden |
| KE' | 0,75 Sekunden |

Alternativ kann die Zeitverzögerung ZV zufällig ermittelt werden. Dabei wird in jedem Empfänger vor dem Versenden der jeweiligen Anfragenachricht per Zufallsgenerator die jeweilige Zeitverzögerung erzeugt.

Der Sender S zum Bereitstellen eines Datenstroms D umfasst folgende Einheiten:
a) Erste Einheit M1 zum Aufteilen des Datenstroms D in zumindest ein Datensegment G1;
b) Zweite Einheit M2 zum Erstellen eines Schlüssels S1 zu dem Datensegment G1, wobei der Schlüssel S1 dem DatensegmentGleindeutig zuordenbar ist;
c) Dritte Einheit M3 zum Auswählen eines KnotensKlaus einer Menge an Knoten K1, K2 in einem Netzwerk NET für das Datensegment G1 auf Basis des zu dem Datensegment G1, G2 zugeordneten Schlüssels S1, S2;
d) Vierte Einheit M4 zum Übermittlung des Datensegments G1 an den für das Datensegment G1 ausgewählten KnotenK1.

Zudem kann der Sender S über eine fünfte Einheit M5 verfügen, die ausgebildet ist, zumindest eine der Weiterbildungen der Verfahren durchzuführen.

Der Empfänger KE zum Abruf zumindest eines Datensegments G1 eines Datenstroms D, wobei zumindest ein Datensegment G1 des Datenstroms D an einem Knoten K12 in einem Netzwerk NET bereitgestellt wird, insbesondere zum Durchführen eines Verfahrens gemäß einem der Ansprüche 2 bis 14,
dadurch gekennzeichnet, dass
folgende Einheiten vorhanden sind:
a) Sechste Einheit M6 zum Bereitstellen eines Schlüssels S1 zu einem Datensegment G1, wobei der Schlüssel S1 dem Datensegment G1 eindeutig zuordenbar ist;
c) Siebte Einheit M7 zum Auswählen eines Knotens K1 aus einer Menge an Knoten K1, K2 in dem Netzwerk NET für das Datensegment G1 auf Basis des zu dem Datensegment G1 zugeordneten Schlüssels S1;
c) Achte Einheit M8 zum Versenden einer Anfragenachricht AN an den ausgewählten Knoten K1 zum Übermitteln des zu dem Schlüssel S1 dazugehörigen Datensegments G1;
d) Neunte Einheit M9 zum Empfangen des Datensegments G1 durch den Empfänger KE.

Zudem kann der Empfänger E über eine zehnte Einheit M10 verfügen, die ausgebildet ist, zumindest eine der Weiterbildungen der Verfahren durchzuführen.

Die Einheiten M1, ..., M10 können jeweils mittels einer Hardware oder unter Zuhilfenahme eines Prozessors in Software oder in einer teilweise Hard- und Softwareausformung implementiert und ausgeführt werden. Die Einheiten sind bspw. in einem an das Internet angeschlossenen Rechner oder über das UMTS-Netz (UMTS-Universal Mobile Telecommunications Sytem) angeschlossenen Mobilgerät, z.B. Mobiltelefon, integriert.

### Literatur

[1] M. Castro et al, "Splitstream: High-Bandwith Multicast in Cooperative Enviroments", SOSP 2003, Oktober 19-22, 2003, Bolton Landing, New York, USA

## Patentansprüche

1. Verfahren zum Bereitstellen eines Datenstroms (D),
wobei
folgende Schritte durchgeführt werden:
a) Aufteilen des Datenstroms (D) in zumindest ein Datensegment (G1);
b) Erstellen eines Schlüssels (S1) zu dem Datensegment (G1), wobei der Schlüssel (S1) dem Datensegment (G1) eindeutig zugeordnet wird;
c) Auswählen eines Knotens (K1) aus einer Menge von Knoten (K1, K2) in einem Netzwerk (NET) für das Datensegment(G1) auf Basis des zu dem Datensegment (G1) zugeordneten Schlüssels (S1, S2) ;
d) Übermittlung des Datensegments (G1) an den für das Datensegment (G1) ausgewählten Knoten (K1).

2. Verfahren zum Abruf zumindest eines Datensegments (G1) eines Datenstroms (D) durch einen Empfänger (KE), wobei das Datensegment (G1) durch einen Knoten (K1, K2) in einem Netzwerk (NET) bereitgestellt wird,
wobei
folgende Schritte ausgeführt werden:
a) Bereitstellen eines von dem Sender (S) zugewiesenen Schlüssels (S1) zu dem Datensegment (G1), wobei der Schlüssel (S1) dem Datensegment (G1) eindeutig zugeordnet wird;
b) Auswählen des Knotens (K1) aus einer Menge an Knoten (K1, K2) in dem Netzwerk (NET) für das Datensegment (G1) auf Basis des zu dem Datensegment (G1, G2) zugeordneten Schlüssels (S1, S2);
c) Versenden einer Anfragenachricht (AN) an den ausgewählten Knoten (K1) zum Übermitteln des zu dem Schlüssel (S1) dazugehörigen Datensegments (G1);
d) Empfangen des Datensegments (G1) durch den Empfänger (KE).

3. Verfahren nach Anspruch_2,
wobei
die Anfragenachricht (AN) durch zumindest eine Kennung (KK), insbesondere den Schlüssel (S1), ergänzt wird, die eine eindeutige Zuordnung der Anfragenachricht (AN) zu dem angefragten Datensegment (G1) kennzeichnet.

4. Verfahren nach Anspruch 2 oder 3,
wobei
dem Empfängerknoten (KE) eine Synchronisationsinformation (SI) mitgeteilt wird, wobei mit Hilfe der Synchronisationsinformation (SI) derjenige Schlüssel (S1) bestimmt wird, der den Abruf eines weiteren Datensegments (G') des Datenstroms (D) gewährleistet.

5. Verfahren nach Anspruch 4,
wobei
durch die Synchronisationsinformation (SI) eine explizite Angabe des Schlüssel (S1) oder zumindest ein erster vorhersagbarer Parameter (VP1) des weiteren Datensegments (G') mitgeteilt wird.

6. Verfahren nach einem der Ansprüche 2 bis 5,
wobei
das Datensegment (G1) bei seiner Übermittelung auf einem Übermittlungspfad (R) von dem Knoten (K1) zu dem Empfänger (KE) durch zumindest einen auf diesem Übermittlungspfad liegenden Zwischenknoten (VK) für eine vorgebbare Zeitdauer (T) gespeichert wird.

7. Verfahren nach Anspruch 6,
wobei
durch den Zwischenknoten (VK) die Anfragenachricht (AN) ausgewertet und, falls das zu dem Schlüssel (S1) dazugehörige Datensegment (G1) vorhanden ist, das Datensegment (G1) an den Empfänger (KE) geschickt wird.

8. Verfahren nach einem der Ansprüche 6 und 7,
wobei
Anfragennachrichten (AN, AN') verschiedener Empfänger
(KE, KE') zum Abruf desselben Datensegments (G1) aufgrund einer vorgebaren oder zufällig ermittelten Zeitverzögerung (ZV) verschickt werden.

9. Verfahren nach einem der vorhergehenden Ansprüche,
wobei
der Schlüssel (S1) durch einen systematischen Schlüssel zeugt wird, wobei der systematische Schlüssel auf Grundlage zumindest eines zweiten vorhersagbaren Parameters (VP2) des Datensegments (G1) generiert wird.

10. Verfahren nach einem der Ansprüche 1 bis 8,
wobei
der Schlüssel (S1) durch einen nicht-systematischen Schlüssel erzeugt wird, wobei der nicht-systematische Schlüssel auf Basis eines Inhalts des Datensegments (G1), insbesondere eines Bildinhalts, generiert wird.

11. Verfahren nach einem der Ansprüche 5 und 9,
wobei
der erste und/oder zweite vorhersagbare Parameter (VP1, VP2) durch eine das Datensegment (G1) charakterisierende Nummer (N1) bestimmt wird.

12. Verfahren nach Anspruch 11,
wobei
durch den ersten und/oder zweiten vorhersagbaren Parameter (VP1, VP2) zusätzlich eine Angabe über eine Verarbeitungsgeschwindigkeit (VG) an Datensegmenten (G1, G2) pro Zeiteinheit umfasst werden, wobei mit Hilfe der Verarbeitungsgeschwindigkeit (VG) der zu einem Zeitpunkt (P) gültige Schlüssel (S2) zum Abruf eines zu diesem Zeitpunkt (P) gültigen Datensegments (GR) erstellt wird.

13. Verfahren nach einem der vorhergehenden Ansprüche,
wobei
ein Auswählen des Knotens (K1) auf Grundlage des Schlüssels (S1) derart durchgeführt wird, dass eine Identität zwischen einem den Knoten (K1) charakterisierenden Parameter (CP1) und dem Schlüssel (S1) maximiert oder zumindest ein vorgebbarer Schwellwert (SW) erreicht.

14. Verfahren nach einem der vorhergehenden Ansprüche,
wobei
zwei oder mehrere Datensegmente (G1, G2) verarbeitet werden.

15. Sender (S) zum Bereitstellen eines Datenstroms (D), zum Durchführen eines Verfahrens gemäß einem der Ansprüche 1 oder 9 bis 14 ohne Rückbezug auf Anspruch 2,
mit
folgenden Einheiten:
a) Erste Einheit (M1) zum Aufteilen des Datenstroms (D) in zumindest ein Datensegment (G1);
b) Zweite Einheit (M2) zum Erstellen eines Schlüssels (S1) zu dem Datensegment (G1), wobei der Schlüssel (S1) dem Datensegment (G1) eindeutig zuordenbar ist;
c) Dritte Einheit (M3) zum Auswählen eines Knotens (K1) aus einer Menge an Knoten (K1, K2) in einem Netzwerk (NET) für das Datensegment (G1) auf Basis des zu dem Datensegment (G1, G2) zugeordneten Schlüssels (S1, S2);
d) Vierte Einheit (M4) zum Übermitteln des Datensegments (G1) an den für das Datensegment (G1) ausgewählten Knoten (K1).

16. Sender (S) nach Anspruch 15,
wobei
der Sender (S) eine fünfte Einheit (M5) umfasst, die derart ausgestaltet ist, dass zumindest ein Schritt einer der Ansprüche 9 bis 14 ohne Anspruch 2 durchführbar ist.

17. Empfänger (KE) zum Abruf zumindest eines Datensegments (G1) eines Datenstroms (D), wobei zumindest ein Datensegment (G1) des Datenstroms (D) an einem Knoten (K12) in einem Netzwerk (NET) bereitgestellt wird, zum Durchführen eines Verfahrens gemäß einem der Ansprüche 2 bis 14,
mit
folgenden Einheiten:
a) Sechste Einheit (M6) zum Bereitstellen eines von dem Sender (S) zugewiesenen Schlüssels (S1) zu einem Datensegment (G1), wobei der Schlüssel (S1) dem Datensegment (G1) eindeutig zuordenbar ist;
b) Siebte Einheit (M7) zum Auswählen eines Knotens (K1) aus einer Menge an Knoten (K1, K2) in dem Netzwerk (NET) für das Datensegment (G1) auf Basis des zu dem Datensegment (G1) zugeordneten Schlüssels (S1);
c) Achte Einheit (M8) zum Versenden einer Anfragenachricht (AN) an den ausgewählten Knoten (K1) zum Übermitteln des zu dem Schlüssel (S1) dazugehörigen Datensegments (G1);
d) Neunte Einheit (M9) zum Empfangen des Datensegments (G1) durch den Empfänger (KE).

18. Empfänger (KE) nach Anspruch 17,
wobei
der Empfänger (KE) eine zehnte Einheit (M10) umfasst, die derart ausgestaltet ist, dass zumindest ein Schritt einer der Ansprüche 3 bis 14 durchführbar ist.

## Claims

1. Method for providing a data stream (D)
wherein
the following steps are performed:
a) Dividing the data stream (D) into at least one data segment (G1);
b) Producing a key (S1) to the data segment (G1), with the key (S1) being unambiguously assigned to the data segment (G1);
c) Selecting a node (K1) for the data segment (G1) from a set of nodes (K1, K2) in a network (NET) on the basis of the key (S1, S2) assigned to the data segment (G1);
d) Conveying the data segment (G1) to the node (K1) selected for the data segment (G1).

2. Method for the retrieval of at least one data segment (G1) of a data stream (D) by a receiver (KE), with the data segment (G1) being made available by a node (K1, K2) in a network (NET),
wherein
the following steps are performed:
a) Providing a key (S1) allocated by the transmitter (S) to the data segment (G1), with the key (S1) being unambiguously assigned to the data segment (G1);
b) Selecting the node (K1) for the data segment (G1) from a set of nodes (K1, K2) in the network (NET) on the basis of the key (S1, S2) assigned to the data segment (G1, G2);
c) Sending a request message (AN) to the selected node (K1) for conveying the data segment (G1) associated with the key (S1);
d) Receipt of the data segment (G1) by the receiver (KE).

3. Method according to claim 2
wherein
the request message (AN) is augmented by at least one identifier (KK), in particular the key (S1), that identifies an unambiguous assignment of the request message (AN) to the requested data segment (G1).

4. Method according to claim 2 or 3
wherein
the receiver node (KE) is supplied with synchronising information (SI) wherein with the aid of the synchronising information (SI), the key (S1) ensuring retrieval of a further data segment (G') of the data stream (D) is determined.

5. Method according to claim 4
wherein
an explicit indication of the key (S1) or at least one first predictable parameter (VP1) of the further data segment (G') is supplied by means of the synchronising information (SI).

6. Method according to one of claims 2 to 5
wherein
the data segment (G1) will while being conveyed on a transmission path (R) from the node (K1) to the receiver (KE) be stored for a specifiable period of time (T) by at least one intermediate node (VK) situated on said transmission path.

7. Method according to claim 6
wherein
the request message (AN) is evaluated by the intermediate node (VK) and, if the data segment (G1) associated with the key (S1) is present, the data segment (G1) will be sent to the receiver (KE).

8. Method according to one of claims 6 and 7
wherein
request messages (AN, AN') of different receivers (KE, KE') are dispatched for retrieving the same data segment (G1) based on a specifiable or randomly ascertained time delay (ZV).

9. Method according to one of the preceding claims
wherein
the key (S1) is produced by means of a systematic key, with the systematic key being generated on the basis of at least one second predictable parameter (VP2) of the data segment (G1).

10. Method according to one of claims 1 to 8
wherein
the key (S1) is produced by means of a non-systematic key, with the non-systematic key being generated on the basis of a content of the data segment (G1), in particular an image content.

11. Method according to one of claims 5 and 9
wherein
the first and/or second predictable parameter (VP1, VP2) are/is determined by means of a number (N1) characterising the data segment (G1).

12. Method according to claim 11
wherein
the first and/or second predictable parameter (VP1, VP2) additionally include(s) an indication of a processing speed (VG) of data segments (G1, G2) per unit of time, with the key (S2) that is valid at an instant (P) for retrieving a data segment (GR) valid at said instant (P) being produced with the aid of the processing speed (VG).

13. Method according to one of the preceding claims
wherein
the node (K1) is selected based on the key (S1) such that an identity between, on the one hand, a parameter (CP1) characterising the node (K1) and, on the other, the key (S1) will be maximised or at least one specifiable threshold (SW) attained.

14. Method according to one of the preceding claims
wherein
two or more data segments (G1, G2) are processed.

15. Transmitter (S) for providing a data stream (D) for implementing a method according to one of claims 1 or 9 to 14 without referring back to claim 2
having the following units:
a) First unit (M1) for dividing the data stream (D) into at least one data segment (G1);
b) Second unit (M2) for producing a key (S1) to the data segment (G1), with the key (S1) being unambiguously assignable to the data segment (G1);
c) Third unit (M3) for selecting a node (K1) for the data segment (G1) from a set of nodes (K1, K2) in a network (NET) on the basis of the key (S1, S2) assigned to the data segment (G1, G2);
d) Fourth unit (M4) for conveying the data segment (G1) to the node (K1) selected for the data segment (G1).

16. Transmitter (S) according to claim 15
wherein
the transmitter (S) includes a fifth unit (M5) embodied such that at least one step of one of claims 9 to 14 can be implemented without claim 2.

17. Receiver (KE) for retrieving at least one data segment (G1) of a data stream (D), with at least one data segment (G1) of the data stream (D) being provided at a node (K12) in a network (NET), for implementing a method according to one of claims 2 to 14
having the following units:
a) Sixth unit (M6) for providing a key (S1) assigned by the transmitter (S) to a data segment (G1), with the key (S1) being unambiguously assignable to the data segment (G1);
b) Seventh unit (M7) for selecting a node (K1) for the data segment (G1) from a set of nodes (K1, K2) in the network (NET) on the basis of the key (S1) assigned to the data segment (G1);
c) Eighth unit (M8) for sending a request message (AN) to the selected node (K1) for conveying the data segment (G1) associated with the key (S1);
d) Ninth unit (M9) for receipt of the data segment (G1) by the receiver (KE).

18. Receiver (KE) according to claim 17
wherein
the receiver (KE) includes a tenth unit (M10) embodied such that at least one step of one of claims 3 to 14 can be implemented.

## Revendications

1. Procédé de mise à disposition d'un flux de données (D),
dans lequel
les étapes suivantes sont réalisées :
a) partage du flux de données (D) en au moins un segment de données (G1) ;
b) génération d'une clé (S1) pour le segment de données (G1), la clé (S1) étant associée de manière univoque au segment de données (G1) ;
c) sélection d'un noeud (K1) parmi une pluralité de noeuds (K2, K2) dans un réseau (NET) pour le segment de données (G1) sur la base de la clé (S1, S2) associée au segment de données (G1) ;
d) transmission du segment de données (G1) au noeud (K1) sélectionné pour le segment de données (G1).

2. Procédé d'interrogation d'au moins un segment de données (G1) d'un flux de données (D) par le biais d'un récepteur (KE), dans lequel le segment de données (G1) est mis à disposition par le biais d'un noeud (K1, K2) dans un réseau (NET),
dans lequel
les étapes suivantes sont réalisées :
a) mise à disposition d'une clé (S1) attribuée par l'émetteur (S) pour le segment de données (G1), la clé (S1) étant associée de manière univoque au segment de données (G1) ;
b) sélection d'un noeud (K1) parmi une pluralité de noeuds (K1, K2) dans le réseau (NET) pour le segment de données (G1) sur la base de la clé (S1, S2) associée au segment de données (G1, G2) ;
c) envoi d'un message d'interrogation (AN) au noeud (K1) sélectionné pour la transmission du segment de données (G1) associé à la clé (S1) ;
d) réception du segment de données (G1) par le récepteur (KE).

3. Procédé selon la revendication 2,
dans lequel
le message d'interrogation (AN) est complété par au moins un code (KK), en particulier la clé (S1), lequel code reconnaît une association univoque entre le message d'interrogation (AN) et le segment de données (G1) interrogé.

4. Procédé selon la revendication 2 ou 3,
dans lequel
une information de synchronisation (SI) est transmise au noeud de réception (KE), la clé (S1) qui garantit l'interrogation d'un autre segment de données (G') du flux de données (D) étant déterminée à l'aide de information de synchronisation (SI).

5. Procédé selon la revendication 4,
dans lequel
l'information de synchronisation (SI) permet de transmettre une indication explicite de la clé (SI) ou au moins un premier paramètre prévisible (VP1) de l'autre segment de données (G').

6. Procédé selon l'une des revendications 2 à 5,
dans lequel
le segment de données (G1) est mémorisé pour une durée (T) qui peut être prédéterminée lors de sa transmission sur un chemin de transmission (R) depuis le noeud (K1) vers le récepteur (KE) par le biais d'au moins un noeud intermédiaire (VK) qui se trouve sur ce chemin de transmission.

7. Procédé selon la revendication 6,
dans lequel
le message d'interrogation (AN) est évalué par le biais du noeud intermédiaire (VK) et, dans le cas où le segment de données (G1) associé à la clé (S1) est présent, le segment de données (G1) est envoyé au récepteur (KE).

8. Procédé selon l'une des revendications 6 et 7,
dans lequel
des messages d'interrogation (AN, AN') de différents récepteurs (KE, KE') sont envoyés pour interroger le même segment de données (G1) en raison d'un retard (ZV) qui peut être prédéterminé ou qui est déterminé de manière fortuite.

9. Procédé selon l'une des revendications précédentes,
dans lequel
la clé (S1) est générée par le biais d'une clé systématique, la clé systématique étant générée sur la base d'au moins un deuxième paramètre prévisible (VP2) du segment de données (G1).

10. Procédé selon l'une des revendications 1 à 8,
dans lequel
la clé (S1) est générée par le biais d'une clé non systématique, la clé non systématique étant générée sur la base d'un contenu du segment de données (G1), en particulier un contenu d'image.

11. Procédé selon l'une des revendications 5 et 9,
dans lequel
le premier et/ou le deuxième paramètre prévisible (VP1, VP2) sont déterminés par le biais d'un numéro (N1) caractérisant le segment de données (G1).

12. Procédé selon la revendication 11,
dans lequel
par le biais du premier et/ou du deuxième paramètre prévisible (VP1, VP2) une indication relative à la vitesse de traitement (VG) au niveau des segments de données (G1, G2) par unité de temps est en outre incluse, la clé (S2) valable à un moment (P) pour interroger un segment de données (GR) valable à ce moment (P) étant générée à l'aide de la vitesse de traitement (VG).

13. Procédé selon l'une des revendications précédentes,
dans lequel
une sélection du noeud (K1) sur la base de la clé (S1) est réalisée de telle sorte qu'une identité entre un paramètre (CP1) caractérisant le noeud (K1) et la clé (S1) est optimisée ou au moins une valeur seuil (SW) qui peut être prédéterminée est atteinte.

14. Procédé selon l'une des revendications précédentes,
dans lequel
deux segments de données (G1, G2) ou plus sont traités.

15. Emetteur (S) de mise à disposition d'un flux de données (D), pour la réalisation d'un procédé selon l'une des revendications 1 ou 9 à 14 sans référence à la revendication 2,
avec
les unités suivantes :
a) une première unité (M1) pour le partage du flux de données (D) en au moins un segment de données (G1) ;
b) une deuxième unité (M2) pour la génération d'une clé (S1) pour le segment de données (G1), la clé (S1) pouvant être associée de manière univoque au segment de données (G1) ;
c) une troisième unité (M3) pour la sélection d'un noeud (K1) parmi une pluralité de noeuds (K1, K2) dans un réseau (NET) pour le segment de données (G1) sur la base de la clé (S1, S2) associée au segment de données (G1, G2) ;
d) une quatrième unité (M4) pour la transmission du segment de données (G1) au noeud (K1) sélectionné pour le segment de données (G1).

16. Emetteur (S) selon la revendication 15,
dans lequel
l'émetteur (S) comprend une cinquième unité (M5), qui est configurée de telle sorte qu'au moins une étape de l'une des revendications 9 à 14 peut être réalisée sans la revendication 2.

17. Récepteur (KE) pour l'interrogation d'au moins un segment de données (G1) d'un flux de données (D), dans lequel au moins un segment de données (G1) du flux de données (D) est mis à disposition au niveau d'un noeud (K12) dans un réseau (NET), pour la réalisation d'un procédé selon l'une des revendications 2 à 14,
avec
les unités suivantes :
a) une sixième unité (M6) pour la mise à disposition d'une clé (S1) attribuée par l'émetteur (S) pour le segment de données (G1), la clé (S1) pouvant être associée de manière univoque au segment de données (G1) ;
b) une septième unité (M7) pour la sélection d'un noeud (K1) parmi une pluralité de noeuds (K1, K2) dans le réseau (NET) pour le segment de données (G1) sur la base de la clé (S1) associée au segment de données (G1) ;
c) une huitième unité (M8) pour l'envoi d'un message d'interrogation (AN) au noeud (K1) sélectionné pour la transmission du segment de données (G1) associé à la clé (S1) ;
d) une neuvième unité (M9) pour la réception du segment de données (G1) par le récepteur (KE).

18. Récepteur (KE) selon la revendication 17,
dans lequel
le récepteur (KE) comprend une dixième unité (M10), qui est configurée de telle sorte qu'au moins une étape de l'une des revendications 3 à 14 peut être réalisée.
